(19) Europäisches Patentamt
European Patent Office
Office européen des brevets

(11) Veröffentlichungsnummer: **0 024 676**
**B1**

(12) # EUROPÄISCHE PATENTSCHRIFT

(45) Veröffentlichungstag der Patentschrift: **30.01.85**

(21) Anmeldenummer: **80104925.5**

(22) Anmeldetag: **19.08.80**

(51) Int. Cl.$^4$: **D 06 M 13/40,** C 09 B 47/26, C 09 B 39/00, C 09 B 33/153 // C07C125/08, C07C143/78

(54) **Verfahren zur Veredlung von faserigen Materialien.**

(30) Priorität: **24.08.79 DE 2934247**

(43) Veröffentlichungstag der Anmeldung:
**11.03.81 Patentblatt 81/10**

(45) Bekanntmachung des Hinweises auf die Patenterteilung:
**30.01.85 Patentblatt 85/05**

(84) Benannte Vertragsstaaten:
**BE CH DE FR GB IT LI**

(56) Entgegenhaltungen:
**CH-A- 421 345**
**DE-A-2 462 011**
**DE-C-1 273 096**
**GB-A- 796 697**
**US-A-2 259 721**
**US-A-2 920 070**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT**
**Postfach 80 03 20**
**D-6230 Frankfurt am Main 80 (DE)**

(72) Erfinder: **Springer, Hartmut, Dr.**
**Am Erdbeerstein 27**
**D-6240 Königstein/Taunus (DE)**

(56) Entgegenhaltungen:
**Chemical Reviews 50 (1962) p. 9**
**The Chemistry of Synthetic Dyes, Band VI, Seite 179**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 024 676 B1

**Beschreibung**

Es wurde gefunden, daß organische Verbindungen, die ein- oder mehrmals einen Rest der allgemeinen Formel (1)

$$-X-\underset{\displaystyle A}{\underset{|}{N}}-CN \qquad (1)$$

enthalten, in welcher X eine Sulfonyl- oder Carbonylgruppe bedeutet und A für ein Wasserstoffatom oder das Äquivalent eines ein-, zwei- oder dreiwertigen Metalls, vorzugsweise eines Alkalimetalls, wie Natrium oder Kalium, oder vorzugsweise für die Ammoniumgruppe steht, sich sehr gut zum Veredeln von faserigen Materialien aller Art eignen.

Die vorliegende Erfindung betrifft somit ein Verfahren zur Veredlung von faserigen Materialien aller Art (nachfolgend Fasermaterialien genannt), das dadurch gekennzeichnet ist, daß man eine organische Verbindung mit faserveredelnden Eigenschaften, die ein- oder mehrmals, wie bspw. zwei- oder dreimal, einen Rest der allgemeinen Formel (1) gebunden enthält, in Form einer wäßrigen Lösung oder einer wäßrigen Dispersion oder einer wäßrig-organischen Lösung oder wäßrig-organischen Dispersion in an sich üblicher Weise auf das Fasermaterial aufbringt und sodann gegebenenfalls das so behandelte Fasermaterial einer Wärme- oder Hitzebehandlung unterwirft.

Die Wärme- oder Hitzebehandlung erfolgt in der Regel bei einer Temperatur zwischen 60 und 230°C. Sie bewirkt eine echtere Fixierung der Verbindungen auf dem Substrat. Die Obergrenze der möglichen Hitzebehandlung richtet sich nach der Natur des Fasermaterials und dessen Thermostabilität. Eine Wärme- oder Hitzebehandlung kann im allgemeinen entfallen, wenn das Fasermaterial Hydroxy-, Amino- oder Carbonamidgruppen besitzt, wie beispielsweise natürliche oder synthetische Polyamidfasermaterialien oder Cellulosefasermaterialien und deren Abkömmlinge; jedoch ist eine Wärmebehandlung, bspw. bis zu 100°C, vorteilhaft.

Organische Verbindung, die ein- oder mehrmals einen Rest der allgemeinen Formel (1) besitzen und die zur Veredlung von Fasermaterialien geeignet sind, sind beispielsweise Wirksubstanzen, die den Fasermaterialien wasserabweisende Eigenschaften, einen weichen Griff, eine Weißtönung (optische Aufhellung), Knitterfestigkeit, erhöhte Anfärbbarkeit oder Flammfestigkeit verleihen. Besonders bevorzugt als solche Verbindungen sind jedoch Farbstoffe, die ein- oder mehrmals den Rest der allgemeinen Formel (1) enthalten.

Die Erfindung betrifft demnach bevorzugt ein Verfahren zum Färben von Fasermaterialien aller Art, bei welchem diese Farbstoffe in wäßrig oder wäßrig-organischer Lösung oder Dispersion auf das Fasermaterial in an sich überlicher Weise aufgebracht werden, beispielsweise durch Klotzen, Pflatschen, Bedrucken oder in einem Bad, und bei dem die Farbstoffe durch Verweilenlassen bei Raumtemperatur oder höherer Temperatur (bspw. 15—60°C) oder durch eine Wärme- oder Hitzebehandlung fixiert werden. Man erhält so echte Färbungen dieser Farbstoffe auf den Fasermaterialien.

Farbstoffe, die ein- oder mehrmals die Gruppe der allgemeinen Formel (1) besitzen, können den verschiedensten Farbstoffklassen angehören, so beispielsweise der Triarylmethan-, Azin-, Dioxazin-, Phenazin-, Phenoxazin-, Nitro-, Stilben-, der Küpen-, Mono-, Dis- oder Polyazofarbstoffreihe und insbesondere der Reihe der Phthalocyaninfarbstoffe. Bevorzugt werden erfindungsgemäß verwendbare Farbstoffe mit der Gruppe der allgemeinen Formel (1) eingesetzt, die wasserlöslich sind. Eine ausreichende Wasserlöslichkeit kann erzielt werden durch das Vorhandensein einer ausreichend großen Anzahl der wasserlöslich machenden Gruppen der allgemeinen Formel (1) und/oder durch zusätzliche wasserlöslich machende Gruppen anderer Art, wie beispielsweise Sulfonsäure- und Carbonsäuregruppen, die das Farbstoffmolekül gebunden enthält.

Das erfindungsgemäße Verfahren kann zur Veredlung von Fasermaterialien aller Art dienen, so beispielsweise von Textilfasern natürlicher oder synthetischer Herkunft, wie Wolle oder andere tierische Haare, Seide, synthetische Eiweißfasern, synthetische Polyamidfasern, wie Polyamid-6, Polyamid-66, Polyamid-11, Polyurethanfasern, Cellulosefasern, wie Baumwolle, Hanf, Leinen, regenerierte oder acetylierte Cellulose, Polyesterfasern, wie beispielsweise solche aus Terephthalsäure und Äthylenglykol, Polyacrylnitrilfasern oder polyolefinische Fasermaterialien, wie Polyäthylen- oder Polypropylenfasern. Insbesondere können auch Gemische von zwei oder mehreren dieser Faserarten miteinander in das erfindungsgemäße Verfahren eingesetzt werden. Das Fasermaterial kann dabei in den verschiedensten Verarbeitungsstufen vorliegen, so als loses Fasergut, als Garn oder Gewebe. Des weiteren eignet sich das erfindungsgemäße Verfahren auch zum Veredeln von Leder und anderen Stoffen faseriger Struktur, wie Papier, Pappe, Kunstleder und dergleichen.

Das erfindungsgemäße Verfahren wird in der Regel so durchgeführt, daß man eine Verbindung, die einen Rest der allgemeinen Formel (1) ein- oder mehrmals enthält, nach in der Praxis üblichen Applikationsverfahren, beispielsweise in analoger Weise, wie sie in Färbe- und Druckverfahren üblich sind, aus einem wäßrigen oder wäßrig-organischen Medium heraus auf das Fasermaterial aufbringt. Diese Applikation kann aus neutralem, alkalischem oder schwach saurem Medium bei Raumtemperatur oder erhöhter Temperatur, so beispielsweise bei einer Temperatur zwischen 10°C und

135°C, erfolgen. Bei wäßrigorganischen Lösungen oder Dispersionen der organischen Verbindungen mit einem Rest der Formel (1) ist der organische Anteil des Mediums bevorzugt ein mit Wasser mischbares Lösemittel, wie beispielsweise ein niederes Alkanol, wie Methanol oder Äthanol, oder ein aliphatisches Carbonamid, wie N-Methyl-pyrrolidon oder Dimethylformamid. Die gemäß üblichen Applikationsmethoden auf das Fasermaterial aufgebrachten Lösungen oder Dispersionen mit der organischen Verbindung mit der Gruppe der allgemeinen Formel (1) können zusätzlich übliche Hilfsmittel und Fertigungsmittel, wie neutrale Elektrolyte, Egalisierhilfsmittel, Dispergierhilfsmittel, Migrationshilfsmittel, Tenside, Harnstoff, Verdickungsmittel, anorganische oder organische Säuren und Basen, anorganische oder organische saure oder basische Salze, enthalten.

Die in Form von Lösungen oder Dispersionen (wie auch Druckpasten, d.h. Lösungen oder Dispersionen mit Verdickungsmitteln) auf das Fasermaterial aufgebrachte Verbindung mit einer Gruppe der allgemeinen Formel (1) wird anschließend, gegebenenfalls nach einem Trocknungsprozeß, bevorzugt einer Wärme- oder Hitzebehandlung unterworfen. Diese Hitzebehandlung kann beispielsweise durch Dämpfen mit überhitztem oder überspanntem Wasserdampf erfolgen, so beispielsweise mit Wasserdampf von einer Temperatur zwischen 100 und 160°C, oder durch Behandlung mit Heißluft entsprechend bekannten Thermofixierverfahren bei einer Temperatur zwischen etwa 150 und 230°C. Der Trocknungsprozeß, der der Hitzebehandlung vorgeschaltet sein kann, kann bei einer Temperatur von 30 bis 100°C durchgeführt werden.

Eine der Varianten innerhalb des erfindungsgemäßen Verfahrens ist beispielsweise die Veredlung von Fasermaterialien durch Direktbehandlung des Fasermaterials aus einer Flotte (Bad), die eine organische Verbindung mit einem Rest der allgemeinen Formel (1) gelöst oder dispergiert und gegebenenfalls Hilfsmittel und andere Zusätze enthält, analog zur Direktfärbemethode (Ausziehverfahren) in Färbeprozessen.

Diese Direktbehandlung kann bei Raumtemperatur oder bei erhöhter Temperatur, so zwischen 20 und 110°C, durchgeführt werden. An diese Direktbehandlung kann sich, vorzugsweise nach einer Zwischentrocknung, eine Hitzebehandlung durch erhitzten Wasserdampf oder Heißluft anschließen. Eine andere Variante des erfindungsgemäßen Verfahrens, inbesondere vorteilhaft anwendbar für organische Verbindungen mit einer Gruppe der allgemeinen Formel (1), die nur eine geringe Affinität zur Faser besitzen, ist die Applikation der Lösung oder Dispersion der organischen Verbindung mit der Gruppe der Formel (1) auf das Fasermaterial mittels Klotzen oder Pflatschen oder Aufsprühen; auch hier kann die Lösung oder Dispersion der organischen Verbindung Hilfsmittel oder andere Zusätze, wie oben angegeben, so bspw. neutrale anorganische Salze, enthalten; sie kann bei Raumtemperatur oder erhöhter Temperatur, so mit einer Temperatur von 10°C bis 60°C, auf das Fasermaterial aufgebracht werden. Nach dieser Imprägnierung wird überschüssige Lösung oder Dispersion der organischen Verbindung abgequetscht und das so vorbehandelte Material anschließend zur Fixierung dieser organischen Verbindung bei Raumtemperatur oder erhöhter Temperatur verweilen lassen und/oder, vorzugsweise nach einer Zwischentrocknung, einer Wärme- oder Hitzebehandlung unterworfen.

Wird die organische Verbindung mit einer Gruppe der allgemeinen Formel (1) nach Druckverfahren auf das Fasermaterial appliziert, so verwendet man zur Herstellung einer entsprechenden Paste, die die organische Verbindung mit der Gruppe der allgemeinen Formel (1) enthält, noch die hierfür üblichen Zusätze, wie beispielsweise Harnstoff oder Dispergiermittel und Verdickungsmittel, wie beispielsweise Methylcellulose oder Alginat-Verdickungen. Mit diesen Druckpasten wird die Ware in üblicher Weise bedruckt und anschließend, gegebenenfalls nach einer Zwischentrocknung, einer Hitzebehandlung, beispielsweise durch Wasserdampf oder Heißluft, unterworfen.

Das erfindungsgemäße Verfahren liefert faserveredelte Materialien, die die Wirksubstanz in hoher Ausbeute (hohem Fixiergrad) und mit guten Echtheiten enthalten. Insbesondere bei der Anwendung von Farbstoffen als organische Verbindung mit einer Gruppe der Formel (1) werden sehr wertvolle, kräftige Färbungen und Drucke erhalten, die sich durch sehr gute Naßechtheiten und sehr gute Lichtechtheiten auszeichnen.

Die erfindungsgemäß verwendeten organischen Verbindungen mit einer Gruppe der allgemeinen Formel (1) sind, sowiet bekannt, neu. Man kann sie beispielsweise herstellen, indem man eine organische Verbindung, die bereits Wirksubstanzeigenschaften (faserveredelnde Eigenschaften) besitzt und eine oder mehrere Sulfochlorid- oder Carbonsäurechloridgruppen gebunden enthält, mit Cyanamid oder seinen Salzen, wie Natriumcyanamid, umsetzt. Diese Umsetzung kann in wäßrigem Medium oder in einem wäßrig-organischen Medium, — wobei dieser Zusatz eines mit Wasser mischbaren organischen Lösemittels vorteilhaft sein kann, — vorgenommen werden; die Umsetzung kann aber auch in wasserfreien organischen Lösemitteln, wie beispielsweise einem niederen Alkanol, wie Methanol, N-Methylpyrrolidon oder Dimethylformamid, erfolgen. Bei der Umsetzung der sulfochlorid- oder carbonsäurechloridgruppenhaltigen Wirksubstanzen mit Cyanamid oder seinen Salzen ist ein Zusatz von säurebindenden Mitteln, wie beispielsweise Natriumacetat, Natrium- oder Kaliumbicarbonat, Natrium- oder Kaliumcarbonat, Pyridin oder anderen tertiären organischen Basen, vorteilhaft. — Die organischen Verbindungen mit der Gruppe der allgemeinen Formel (1) können auch in der Weise hergestellt werden, daß man von entsprechenden Vorprodukten ausgeht, die bereits die Gruppe der Formel (1) enthalten, und aus diesen Vorprodukten in einer dem Chemiker üblichen und bekannten Verfahrensweise die jeweiligen Wirksubstanzen aufbaut, so beispielsweise bei der Herstellung von Azover-

bindungen, daß man eine für Azofarbstoffe übliche Diazoniumverbindung mit einer Kupplungskomponente, die die Gruppe der allgemeinen formel (1) enthält, kuppelt und so zu einem verfahrensgemäß verwendbaren Farbstoff der vorliegenden Erfindung kommt.

Beispiele für die Synthese der erfindungsgemäß verwendbaren organischen Verbindungen mit faserveredelnden Eigenschaften, die die Gruppe der Formel (1) enthalten, sind in der am gleichen Tage eingereichten Patentanmeldung EP—A2—0024677 (80104926), basierend auf deutschen Prioritätsanmeldung P 29 34 248.1 vom 24. August 1979, niedergelegt.

Die nachfolgenden Beispiele dienen zur Erläuterung der Erfindung. Die Teile sind Gewichtsteile, die Angaben in Prozent beziehen sich auf Gewichtsprozente, soweit nicht anders vermerkt. Volumenteile verhalten sich zu Gewichtsteilen wie Liter zu Kilogramm. Die Formelreste CuPc, NiPc und CoPc bedeuten in den Beispielen das unsubstituierte Kupfer-, Nickel- oder Kobaltphthalocyaningerüst.

Beispiel 1

20 Teile des Farbstoffes der Formel

$$CuPc{-}[SO_2{-}N(NH_4){-}CN]_4$$

werden in 1000 Teilen Wasser gelöst. In diesem Färbebad behandelt man ein Baumwollgewebe bei einem Flottenverhältnis von 1:20 eine Stunde bei 95°C. Das Gewebe wird sodann aus dem Bad herausgenommen, abgequetscht, getrocknet und 2 Minuten bei 210°C thermofixiert. Anschließend spült man es mit kaltem und mit heißem Wasser und zuletzt mit einer kochenden schwachen Seifenlösung. Man erhält eine türkis-blaue Färbung mit guten Waschechtheiten und sehr guter Lichtechtheit.

Beispiel 2

15 Teile des Farbstoffs der Formel

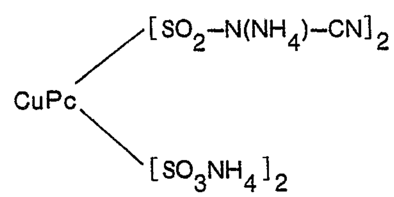

werden zusammen mit 20 Teilen Harnstoff in 200 Teilen heißem Wasser gelöst. Der intensiv türkisblau gefärbten Lösung werden unter Rühren 400 Teile einer 4 %igen wäßrigen Natriumalginatverdickung zugegeben. Die so erhaltene Paste wird mit Wasser und Verdickung auf 1000 Teile aufgefüllt. Mit der so hergestellten Druckpaste wird ein Baumwollgewebe bedruckt, getrocknet und sodann 2 Minuten bei 210°C thermofixiert, anschließend mit kaltem und heißem Wasser gespült und getrocknet. Man erhält ein kräftiges türkisblaues Druckmuster, das eine gute Lichtechtheit besitzt und gegenüber Waschbehandlungen sehr gut beständig ist.

Beispiel 3

Mercerisiertes Baumwollgewebe wird bei einer Temperatur von 20—80°C (vorzugsweise 20°C) mit einer wäßrigen Lösung geklotzt, die 40 Teile des Farbstoffs der Formel

$$CuPc{-}[SO_2{-}N(NH_4){-}CN]_4$$

in 1000 Volumenteilen enthält. Das geklotzte Gewebe wird auf eine Docke gewickelt, mit Plastikfolie umwickelt und 24 Stunden bei 20—80°C (vorzugsweise 20°C) gelagert.

Anschließend wird das so behandelte Gewebe bei 100°C getrocknet und 3 Minuten mit Heißluft von 220°C fixiert. Danach wird die erhaltene Färbung kalt und heiß gespült, 10 Minuten in einer wäßrigen Flotte, die in 1000 Teilen 1 Teil eines nichtionogenen Waschmittels (Alkylarylpolyglykoläther) enthält, bei Kochtemperatur behandelt, wiederum gespült und getrocknet. Man erhält eine waschechte türkisblaue Färbung von sehr guter Lichtechtheit.

Beispiel 4

100 Teile eines mercerisierten Baumwollgewebes werden bei 80°C 60 Minuten in 3000 Volumenteilen einer wäßrigen Lösung behandelt, die 20 Teile Farbstoff der Formel

$$CuPC{-}[SO_2N(NH_4){-}CN]_4$$

und 3 bis 6 Teile eines Ammoniumsalzes, wie bspw. Ammoniumsulfat oder Monoammoniumphosphat, enthält. Anschließend wird das Gewebe auf dem Foulard so abgequetscht, daß von der Färbeflotte eine Restmenge auf dem Gewebe bleibt, die 80% des Gewichts des trockenen Gewebes ausmacht. Danach wird bei 100°C getrocknet und 2 Minuten mit Heißluft von 220°C fixiert. Die erhaltene Färbung wird kalt und heiß gespült, 10 Minuten in einer wäßrigen Flotte, die in 1000 Teilen 1 Teil eines nichtionogenen Waschmittels (Alkylarylpolyglykoläther) enthält, bei Kochtemperatur behandelt, wiederum gespült und getrocknet. Man erhält eine waschechte türkisblaue Färbung mit sehr guter Lichtechtheit. — Ein praktisch gleich gutes Färbeergebnis erhält man ohne Verwendung des Ammoniumsalzes.

### Beispiel 5

Wollgewebe wird in einem Färbebad, das mit Essigsäure auf einen pH-Wert von 5,3 eingestellt wurde und

1,5% des Farbstoffs der Formel $CuPc-[SO_2-N(Na)-CN]_4$
1% eines handelsüblichen schwach kationaktiven Egalisierhilfsmittels, bspw. auf Basis eines Fettaminpolyoxäthylats,
1% eines Alkylphenylpolyglykoläthers als Verteilungsmittel sowie
2% Ammoniumacetat,

jeweils bezogen auf das Gewicht des Wollgewebes, enthält, bei einem Flottenverhältnis von 1:40 in folgender Weise gefärbt:

Das Wollgewebe wird in das Färbebad, das zunächst nur die angegebenen Chemikalien und Hilfsmittel enthält, eingebracht. Nach 10 Minuten gibt man den Farbstoff in gelöster Form hinzu, heizt im Verlauf von einer Stunde auf 98°C an und färbt eine Stunde bei dieser Temperatur. Der Farbstoff zieht gleichmäßig auf das Wollgewebe auf, danach ist das Färbebad erschöpft. Das Gewebe wird nach dem Färben gründlich mit Wasser gespült. Man erhält eine Färbung mit guten Naßechtheiten und guter Lichtechtheit.

### Beispiel 6

Polyamidgewebe wird auf dieselbe Weise, wie in Beispiel 5 beschrieben, in einem Färbebad mit einem pH-Wert von 4 gefärbt, das

1,5% des Farbstoffs der Formel $CuPc-[SO_2-N(Na)-CN]_4$
2% eines gebräuchlichen anionischen Egalisierhilfsmittels, bspw. auf Basis einer heterocyclischen Polysulfosäure,
0,5% eines gebräuchlichen Egalisierhilfsmittels, bspw. auf Basis eines Alkylphenylpolyglykoläthers, und
2% 60%ige wäßrige Essigsäure

enthält. Man erhält eine kräftige türkisblaue Färbung.

### Beispiele 7 bis 38

Verfährt man in erfindungsgemäßer Weise, wie bspw. in einem der vorstehend beschriebenen Beispiele beschrieben, setzt jedoch anstelle der dort verwendeten Farbstoffe einen der in den nachfolgenden Tabellenbeispielen genannten Farbstoffe in Form seines Ammoniumsalzes ein, so erhält man Färbungen bzw. Drucke mit den für das entsprechende Tabellenbeispiel aufgeführten Nuancen und guten Naßechtheitseigenschaften:

| Beispiel | Farbstoff | Farbton der Färbung |
|---|---|---|
| 7 | CuPc–(3)–($SO_2$–NH–CN)$_3$ | türkisblau |
| 8 | CuPc–(3)–($SO_2$–NH–CN)$_{2,5}$ | türkisblau |
| 9 | CuPc–(3)–($SO_2$–NH–CH)$_4$ | türkisblau |
| 10 | 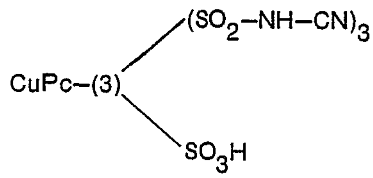 | türkisblau |
| 11 | 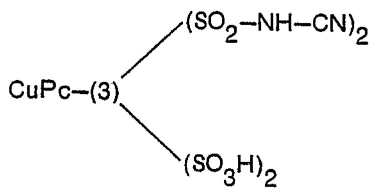 | türkisblau |
| 12 | 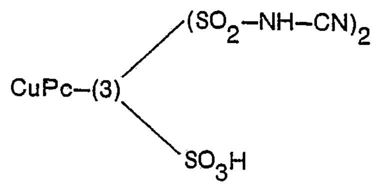 | türkisblau |
| 13 | CuPc–(4)–($SO_2$NH–CN)$_4$ | türkisblau |
| 14 | NiPc–(3)–($SO_2$NH–CN)$_3$ | blaugrün |
| 15 | CoPc–(3)–($SO_2$–NH–CN)$_3$ | blaugrün |
| 16 | 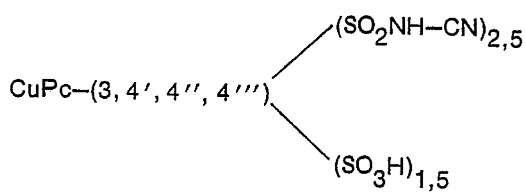 | türkisblau |
| 17 | 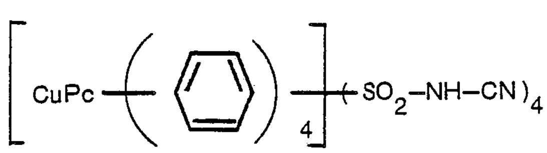 | grün |

| Beispiel | Farbstoff | Farbton der Färbung |
|---|---|---|
| 18 | 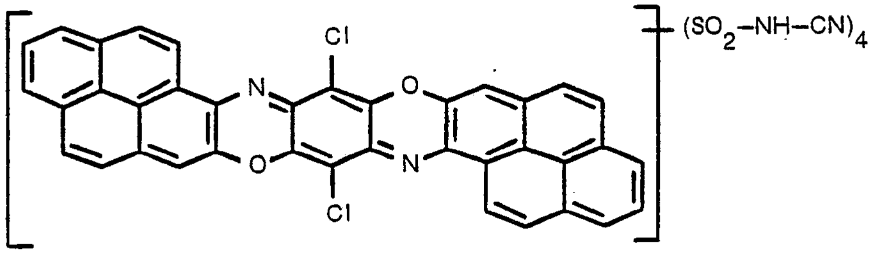 | blau |
| 19 | 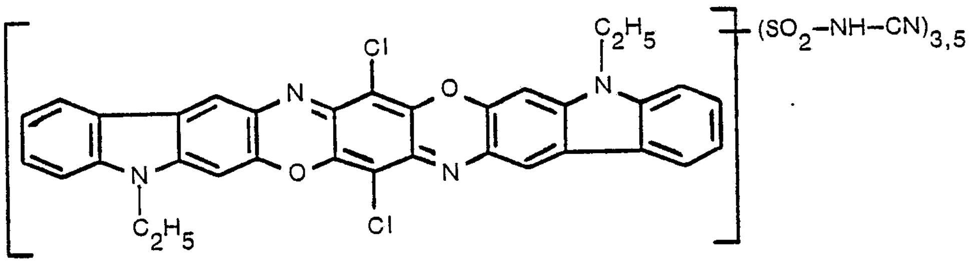 | blau |
| 20 | 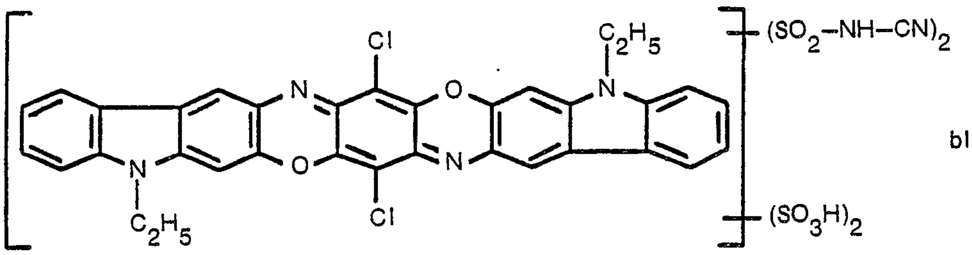 | blau |
| 21 | 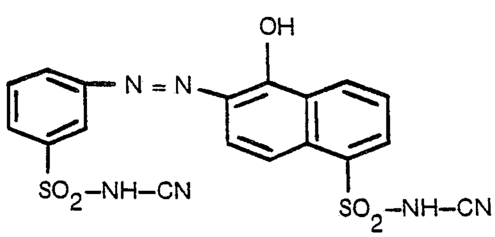 | orange |
| 22 | 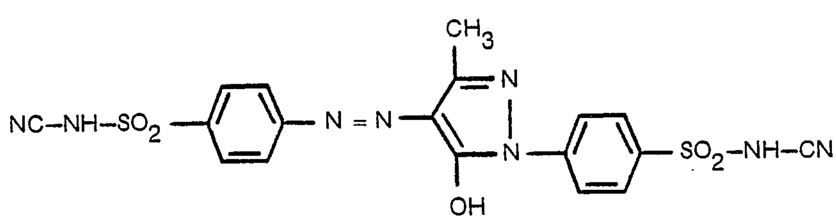 | gelb |

| Beispiel | Farbstoff | Farbton der Färbung |
|---|---|---|
| 23 | 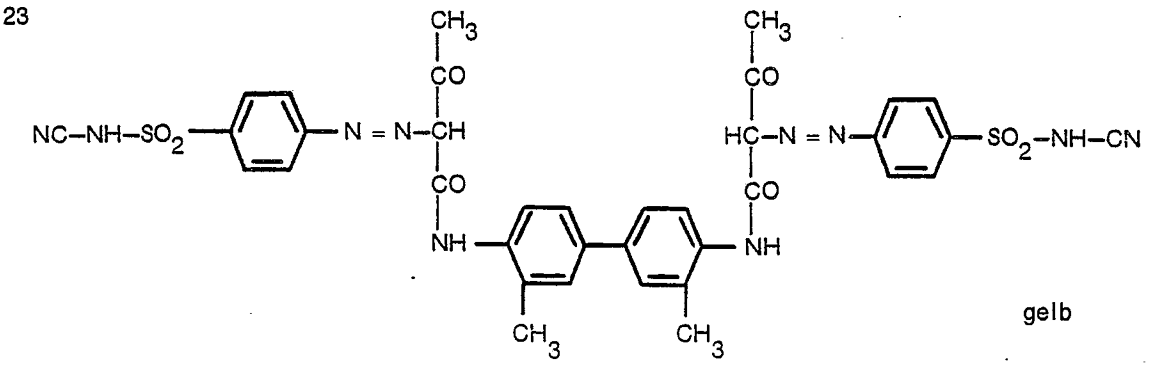 | gelb |
| 24 | 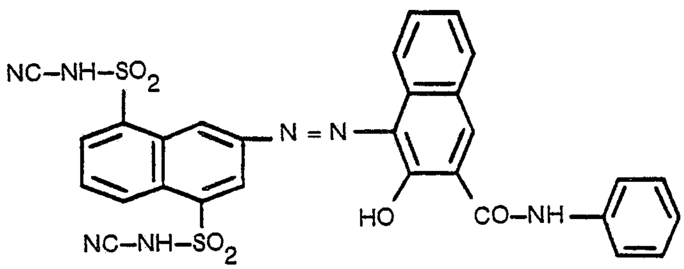 | rot |
| 25 | 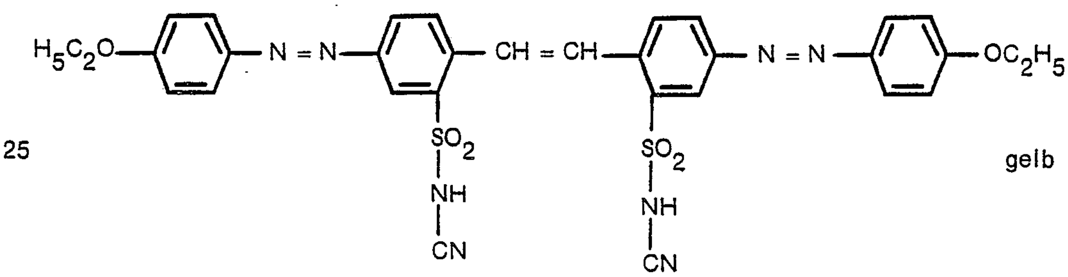 | gelb |
| 26 | 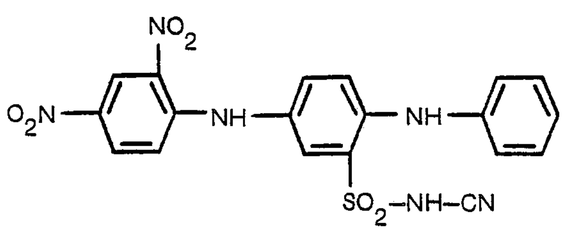 | orange |
| 27 | 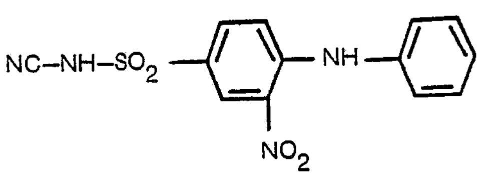 | gelb |

| Beispiel | Farbstoff | Farbton der Färbung |
|---|---|---|
| 28 | 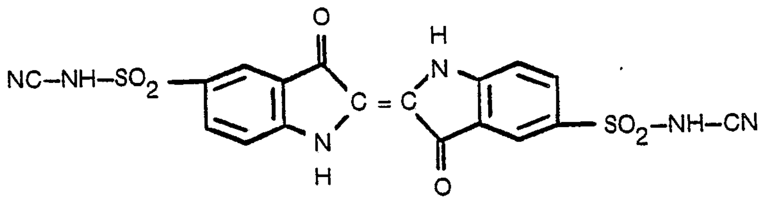 | blau |
| 29 | 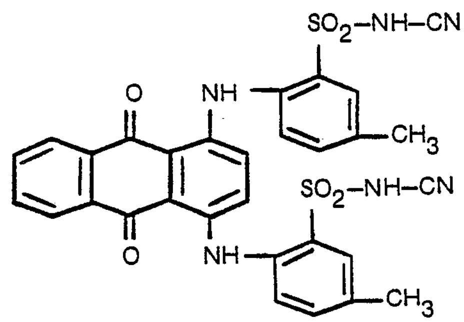 | grün |
| 30 | 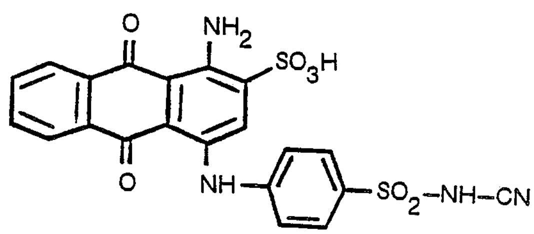 | blau |
| 31 | 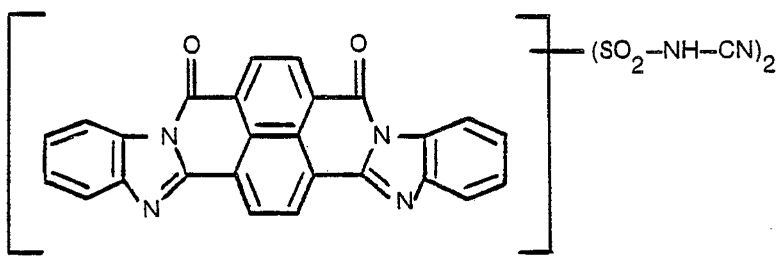 | braun |
| 32 | 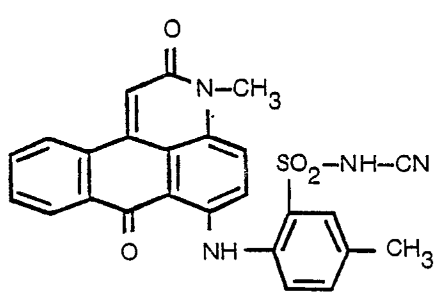 | rot |

| Beispiel | Farbstoff | Farbton der Färbung |
|---|---|---|
| 33 | 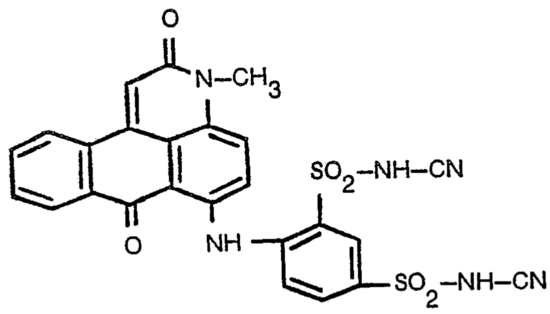 | rot |
| 34 | Farbstoff, hergestellt durch überführung von C.I. Solvent Black 5 (Colour Index Nr. 54015) mittels Chlorsulfonsäure und Thionylchlorid in das Sulfochlorid und Umsetzung mit Cyanamid | schwarz |
| 35 | 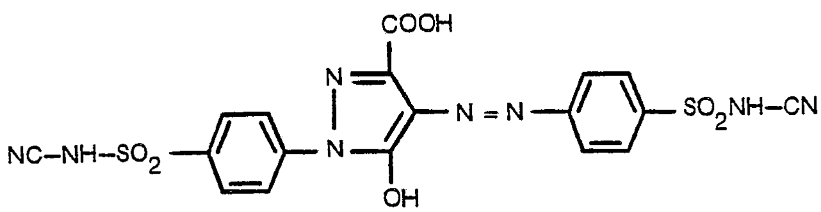 | gelb |
| 36 | 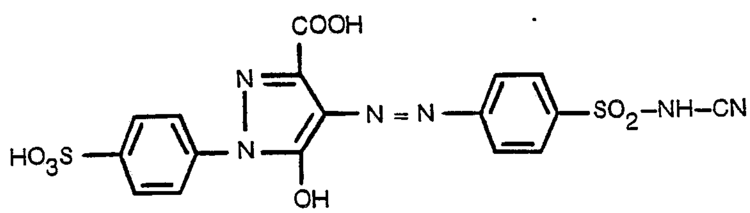 | gelb |
| 37 | 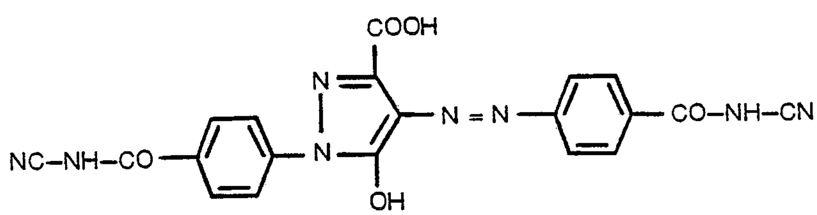 | gelb |
| 38 | 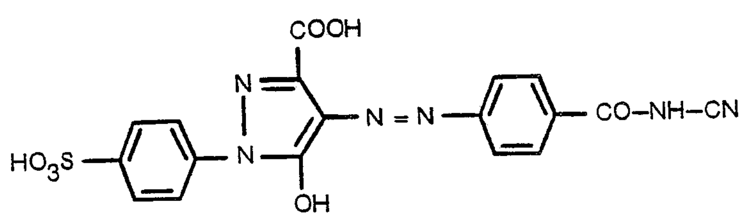 | gelb |

*Synthesebeispiele* zur Erläuterung der Synthese der erfindungsgemäß verwendbaren Verbindungen mit einem Rest der allgemeinen Formel (1):

Beispiel I

Der im vorstehenden Beispiel 1 verwendete Kupferphthalocyaninfarbstoff kann folgendermaßen erhalten werden:

In eine Lösung von 21 Teilen Cyanamid und 20 Teilen Natriumhydroxid in 700 Teilen Wasser trägt man unter gutem Rühren 97 Teile Kupferphthalocyanin-(3)-tetrasulfochlorid in Form eines feuchten Filterkuchens ein. Die Reaktion beginnt unter schwacher Wärmeentwicklung, under die Temperatur des Reaktionsgemisches steigt bis auf etwa 30°C an. Durch fortlaufendes Zutropfen von etwa 155 Volumenteilen 2n-Natronlauge hält man den pH-Wert des Reaktionsgemisches bei 10. Die Reaktion ist nach etwa 6 Stunden beendet, was sich dadurch zeigt, daß keine Natronlauge mehr verbraucht wird; es ist eine klare Lösung entstanden. Mit Salzsäure stellt man die Lösung neutral und dampft sie bei vermindertem Druck zur Trockne ein. Man erhält 143 Teile eines salzhaltigen türkisblauen Farbstoffpulvers, das das Natriumsalz der Verbindung der Formel

$$CuPc\text{—}(SO_2\text{—}NH\text{—}CN)_4$$

als Farbstoff zu 75% enthält.

Die Verbindung der Formel $CuPc(SO_2NH\text{—}CN)_4$ läßt sich in dieser sauren Form erhalten, indem man die wäßrige Lösung des oben erhaltenen Natriumsalzes mit Salzsäure ansäuert, die ausgefallene Farbstoffsäure abfiltriert, gründlich mit verdünnter wäßriger Salzsäure wäscht und unter vermindertem Druck trocknet. — Aus der so gewonnenen Farbstoffsäure kann man das Ammoniumsalz herstellen, indem man die Säure unter Zugabe von wäßriger Ammoniaklösung zur neutralen Reaktion in Wasser löst und diese Lösung unter vermindertem Druck zur Trockne eindampft.

Beispiel II

Der im obigen Beispiel 2 eingesetzte Kupferphthalocyaninfarbstoff kann wie folgt hergestellt werden:

In eine Lösung von 8,4 Teilen Cyanamid und 8,0 Teilen Natriumhydroxid in 300 Teilen Wasser trägt man unter gutem Rühren 97 Teile Kupferphthalocyanin-(3)-tetrasulfochlorid in Form eines feuchten Filterkuchens ein. Durch die einsetzende Reaktion fällt der pH-Wert des Reaktionsgemisches ab. Man hält ihn durch fortlaufende Zugabe von 2n-Natronlauge bei 10 und rührt das Reaktionsgemisch, bis kein Alkalihydroxid mehr verbraucht wird; es sind hierfür etwa 310 Volumenteile 2n-Natronlauge erforderlich. Es ist eine tiefblaue Lösung entstanden. Zur Isolierung des gebildeten Farbstoffes säuert man mit 70 Teilen konzentrierter Salzsäure an und salzt ihn mit 200 Teilen Ammoniumchlorid aus. Man filtriert den Niederschlag ab, wäscht ihn gründlich mit verdünnter Salzsäure und trocknet ihn unter vermindertem Druck. Man erhält 96 Teile eines Farbstoffpulvers mit einem Farbstoffgehalt von 98%. Die erhaltene Farbstoffverbindung hat, in Form der freien Säure geschrieben, die folgende Konstitution:

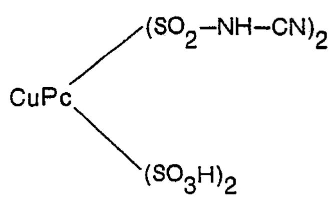

Die erhaltene Verbindung löst man in 1200 Teilen Wasser unter Hinzufügen von 27 Teilen einer 25 %igen wäßrigen Ammoniaklösung und dampft die erhaltene Farbstofflösung unter vermindertem Druck zur Trockne ein. Man erhält 102 Teile des Ammoniumsalzes der obigen Phthalocyaninverbindung entsprechend der Formel

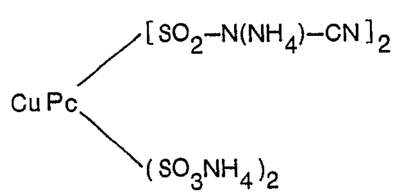

Beispiel III

Der im obigen Beispiel 19 verwendete Farbstoff kann wie folgt hergestellt werden: Eine Verbindung der Formel

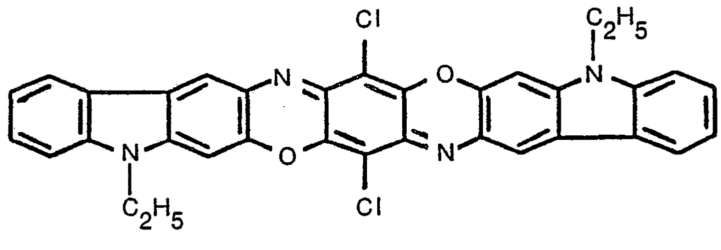

(bekännt aus Colour Index als C.I. Pigment Violet 23) wird in an und für sich bekannter Weise durch mehrstündiges Erhitzen mit Chlorsulfonsäure und anschließende Behandlung des Reaktionsgemisches mit Thionylchlorid in die entsprechende Sulfochloridverbindung übergeführt, wobei man die menge an Chlorsulfonsäure, Reaktionstemperatur und -dauer so bemißt, daß in C.I. Pigment Violet 23 durchschnittlich 3,5-Sulfonsäurechloridgruppen eingeführt werden. Die Sulfochloridverbindung wird isoliert und in wäßriger Suspension bei einem pH-Wert von 12,5 und bei einer Temperatur von etwa 20—50°C mit Cyanamid umgesetzt. Die Lösung wird sodann neutral gestellt und bei vermindertem Druck zur Trockne eingedampft. Der so erhaltene Farbstoff kann in Form der Säure erhalten werden, indem man dessen wäßrige Lösung mit Salzsäure ansäuert, die ausgefallene Farbstoffsäure abfiltriert, grundlich mit verdünnter wäßriger Salzsäure wäscht und unter vermindertem Druck trocknet. — Aus der so gewonnenen Farbstoffsäure kann man das Ammoniumsalz herstellen, in dem man die Säure unter Zugabe von wäßriger Ammoniaklösung zur neutralen Reaktion in Wasser löst und diese Lösung unter vermindertem Druck zur Trockne eindampft.

Beispiel IV

Zur Herstellung des im obigen Beispiel 21 verwendeten Azofarbstoffes kann man in der Weise verfahren, daß man zuerst das 3-Aminophenylsulfonyl-cyanamid als Diazokomponente herstellt, indem man 3-Acetylamino-benzolsulfochlorid in wäßriger Suspension mit Cyanamid bei einer Temperatur von etwa 20°C bei einem pH-Wert von etwa 9,5 umsetzt und anschließend die Acetylaminogruppe alkalisch bei einem pH-Wert von etwa 10 und bei einer Temperatur von etwa 80°C in an und für sich üblicher Weise verseift. Die so erhaltene Aminoverbindung wird sodann in an und für sich üblicher Weise diazotiert und mit 5-Hydroxynaphthyl-(1)-sulfonylcyanamid gekuppelt. Diese Kupplungskomponente kann wie folgt hergestellt werden: 1-Naphthol-5-sulfonsäure wird in üblicher Weise, beispielsweise mit Acetanhydrid, acetyliert; die Sulfonsäuregruppe dieser Acylverbindung wird sodann in an und für sich bekannter Weise mittels Phosphorpentachlorid in die Sulfochloridgruppe übergeführt, diese sodann gemäß einer der in den obigen Beispielen genannten Verfahrensweisen mit Cyanamid umgesetzt und die so hergestellte 1-Acetyloxy-naphthalin-5-sulfonylcyanamid-Verbindung in üblicher Weise zur obengenannten Kupplungskomponente alkalisch verseift.

Beispiel V

Der im obigen Beispiel 23 verwendete Disazofarbstoff kann wie folgt hergestellt werden: Als Diazokomponente wird 4-Aminophenylsulfonyl-cyanamid eingesetzt; dieses kann in analoger Weise, wie im obigen Beispiel IV beschrieben, durch Umsetzung von 4-Acetylamino-benzolsulfochlorid mit Cyanamid und anschließender alkalischer Verseifung hergestellt werden. Dieses Amin wird in üblicher Weise diazotiert und mit 4,4'-Bis-acetoacetylamino-3,3'-dimethyldiphenyl gekuppelt. Die Isolierung, die Herstellung der freien Säure oder Überführung in das Ammoniumsalz kann in analoger Weise, wie im obigen Beispiel I beschrieben, durchgeführt werden.

Beispiel VI

Der in Beispiel 25 verwendete Farbstoff kann wie folgt hergestellt werden: Die Verbindung der Formel

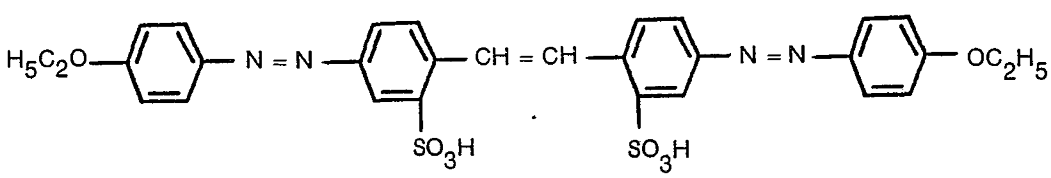

(hergestellt durch Tetrazotierung von 4,4'-Diaminostilben-2,2'-disulfonsäure und Kupplung mit Phenol und anschließender Umsetzung mit Diäthylsulfat; bekannt als C.I. Direct Yellow 12) wird unter an und für sich bekannten Verfahrensbedingungen zur Herstellung von Sulfonsäurechloriden aus entsprechenden Sulfonsäuren mit Thionylchlorid umgesetzt. Die Sulfochloridverbindung wird sodann in analoger Weise, wie in einem der obigen Beispiele I bis IV beschrieben, mit Cyanamid in wäßriger Suspension bei einem pH-Wert von 12 in den Farbstoff des Beispieles 25 übergeführt. Dieser kann in analoger Weise, wie im Beispiel I beschrieben, isoliert und in das Ammoniumsalz übergeführt werden.

Beispiel VII

Der im obigen Beispiel 26 verwendete Farbstoff kann wie folgt hergestellt werden: Die Verbindung der Formel

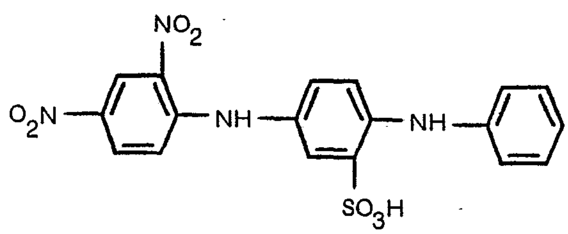

(bekannt als C.I. Acid Orange 3) wird in an und für sich üblicher Weise zur Herstellung von Sulfochloridverbindungen aus den ensprechenden Sulfonsäuren mittels Thionylchlorid in die Sulfonsäurechloridverbindung übergeführt und anschließend in analoger Weise, wie in einem der obigen Beispiele I bis IV beschrieben, in wäßriger Suspension bei einem pH-Wert von 12 mit Cyanamid umgesetzt. Der so erhaltene Farbstoff des beispieles 26 kann in analoger Weise, wie im Beispiel I beschrieben, isoliert bzw. in das Ammoniumsalz übergeführt werden.

Beispiel VIII

4-Amino-phenylsulfonyl-cyanamid (s. obiges Beispiel V) wird in an und für sich bekannter Weise zur Herstellung von 4-Phenylamino-1-amino-anthrachinon-2-sulfonsäuren (vgl. DE—PS 280 646) in einer Kondensationsreaktion mit 1-Amino-4-brom-anthrachinon-2-sulfonsäure (Bromaminsäure) umgesetzt und der so erhaltene Farbstoff des Beispieles 30 kann in analoger Weise, wie om obigen Beispiel I beschrieben, isoliert bzw. in das Ammoniumsalz übergeführt werden.

Beispiel IX

Zur Herstellung des im obigen Beispiel 31 verwendeten Farbstoffes wird die Verbindung der Formel

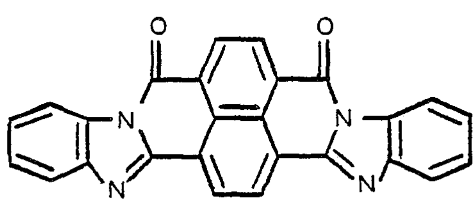

(bekannt aus Colour Index als C.I. Pigment Red 194) in an und für sich üblicher Weise mit Chlorsulfonsäure und Thionylchlorid in die Disulfochlorid-Verbindung übergeführt und anschließend in wäßriger Suspension bei einem pH-Wert von 12 mit Cyanamid zum Farbstoff des Beispieles 31 umgesetzt. Die Isolierung und Überführung dieses Farbstoffes in das Ammoniumsalz kann entsprechend dem obigen Beispiel I erfolgen.

Beispiel X

Die Herstellung des im obigen Beispiel 35 verwendeten Farbstoffes kann durchgeführt werden, indem man 4-Aminophenylsulfonyl-cyanamid (s. obiges Beispiel V) diazotiert und mit Acetylbernsteinsäure-äthylester kuppelt, in dieser Azoverbindung in an und für sich üblicher Weise unter alkalischen bedingungen den Ringschluß zum Pyrazolonring bei gleichzeitiger oder nachträglicher Hydrolyse der

Carbäthoxygruppe zur Carboxygruppe durchführt, und anschließend die so hergestellte Verbindung der Formel

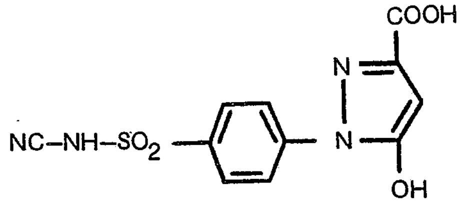

mit einem zweiten Mol diazotiertem 4-Aminophenylsulfonylcyanamid zum Farbstoff des Beispieles 35 kuppelt, der in analoger Weise zum obigen Beispiel I isoliert bzw. in das Ammoniumsalz übergeführt werden kann.

## Patentansprüche

1. Verfahren zur Veredlung von faserigen Materialien aller Art, dadurch gekennzeichnet, daß man eine organische Verbindung mit faserveredelnden Eigenschaften, die ein- oder mehrmals einen Rest der allgemeinen Formel (1)

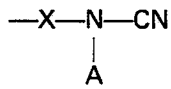
(1)

in welcher X eine Sulfonyl- oder Carbonylgruppe bedeutet und A für ein Wasserstoffatom oder das Äquivalent eines ein-, zwei- oder dreiwertigen Metalls oder für die Ammoniumgruppe steht, gebunden enthält, in Form einer wäßrigen oder wäßrig-organischen Lösung oder Dispersion auf das faserige Material aufbringt und sodann gegebenenfalls das so behandelte faserige Material einer Wärme- oder Hitzebehandlung unterwirft.

2. Verfahren nach Anspruch 1, dadurch gekennzeichnet, daß die organische Verbindung mit der Gruppe der allgemeinen Formel (1) ein wasserlöslicher Farbstoff ist.

3. Verfahren nach Anspruch 1 oder 2, dadurch gekennzeichnet, daß die Wärme- oder Hitzebehandlung bei einer Temperatur zwischen 60 und 230°C erfolgt.

## Revendications

1. Procédé pour ennoblir des matières fibreuses de toute sorte, procédé caractérisé en ce qu'on applique sur la matière fibreuse un composé organique qui a des propriétés ennoblissantes à l'égard des fibres et qui contient en un ou plusieurs exemplaires un radical répondant à la formule générale 1;

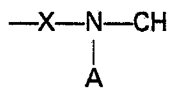
(1)

dans laquelle

X représente un radical sulfonyle ou carbonyle et

A représente un atome d'hydrogène ou l'équivalent d'un métal monovalent, bivalent ou trivalent ou un radical d'ammonium,

sous la forme d'une solution ou dispersion aqueuse ou aquo-organique, puis on soumet éventuellement la matière fibreuse ainsi traitée à un traitement par la chaleur.

2. Procédé selon la revendication 1, caractérisé en ce que le composé organique porteur d'un radical de formule générale 1 est un colorant soluble dans l'eau.

3. Procédé selon l'une des revendications 1 et 2, caractérisé en ce que le traitement par la chaleur est effectué à une température comrise entre 60 et 230°C.

## Claims

1. A process for finishing fibrous materials of every description, characterized by that an organic compound having fiber-finishing properties, which contains one or several radicals of the general formula (1)

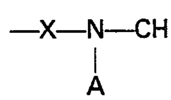
(1)

in which X is a sulfonyl or carbonyl group and A represents a hydrogen atom or the equivalent of a mono-, di- or trivalent metal or the ammonium group, is applied in the form of an aqueous or organo-aqueous solution or dispersion onto the fibrous material and the so treated fibrous material is then optionally subjected to a thermal or heat treatment.

2. A process according to claim 1, characterized by that the organic compound containing the group of formula (1) is a water-soluble dyestuff.

3. A process according to claim 1 or 2, characterized in that the thermal or heat treatment is carried out at a temperature between 60 and 230°C.